Europäisches Patentamt

(19) European Patent Office

Office européen des brevets

(11) Numéro de publication: **0 005 122**
**A1**

(12) **DEMANDE DE BREVET EUROPEEN**

(21) Numéro de dépôt: **79810034.3**

(22) Date de dépôt: **24.04.79**

(51) Int. Cl.²: **E 02 B 15/04**
**B 65 D 89/10**

(30) Priorité: **24.04.78 CH 4363/78**

(43) Date de publication de la demande:
**31.10.79 Bulletin 79/22**

(84) Etats Contractants Désignés:
**BE IT NL**

(71) Demandeur: **Favre, Ernest**

**CH-1725 Ecuvillens(CH)**

(72) Inventeur: **Favre, Ernest**

**CH-1725 Ecuvillens(CH)**

(74) Mandataire: **Charbonnier, Georges R. et al,**
**8, Avenue Peschier**
**CH-1206 Geneve(CH)**

(54) Barrage collecteur d'hydrocarbures.

(57) Le barrage vise à contenir et à collecter les nappes d'hydrocarbures flottant à la surface des plans d'eau (lacs, mers, etc.).

Il est constitué par des cuves présentant une ouverture supérieure (16) et un orifice (17), et par des flotteurs (15) qui maintiennent ces cuves immergées au 9/10 de leur hauteur de manière que les vagues se déversent dans les cuves à travers lesdites ouvertures (16) en chassant progressivement l'eau à travers les orifices (17) jusqu'à ce que les cuves soient complètement remplies d'hydrocarbures.

EP 0 005 122 A1

Fig. 2

0005122

- 1 -

BARRAGE COLLECTEUR D'HYDROCARBURES

On connaît les conséquences désastreuses d'accidents maritimes au cours desquels des chargements d'hydrocarbures importants, souvent de l'ordre de plusieurs centaines de milliers de tonnes, sont déversées en mer et se répandent sur sa surface.

La marée noire qui sévit actuellement en Bretagne, à la suite de l'échouage du pétrolier géant AMOCO CADIZ, en est un douloureux exemple. La flore, la faune sont anéanties, les côtes, les plages, les rochers sont souillés, le tourisme compromis, etc. etc.

Les moyens mis en oeuvre pour stopper l'avance de la marée noire se sont malheureusement révélés dérisoires et pratiquement inefficaces de sorte que les habitants des régions sinistrées, les sauveteurs, les responsables de la lutte anti-pollution ont dû assister impuissants à la progression inexorable de ce fléau.

La présente invention vise principalement à mettre à la disposition des régions et Etats sinistrés des barrages de conception simple et efficace permettant de stopper la progression de la pollution de collecter les

0005122

- 2 -

hydrocarbures sans moyens mécaniques tels que pompes, aspirateurs, etc., sous le seul effet de l'agitation de la mer.

Le dessin ci-annexé représente, à titre d'exemple, une forme d'exécution du barrage selon l'invention.

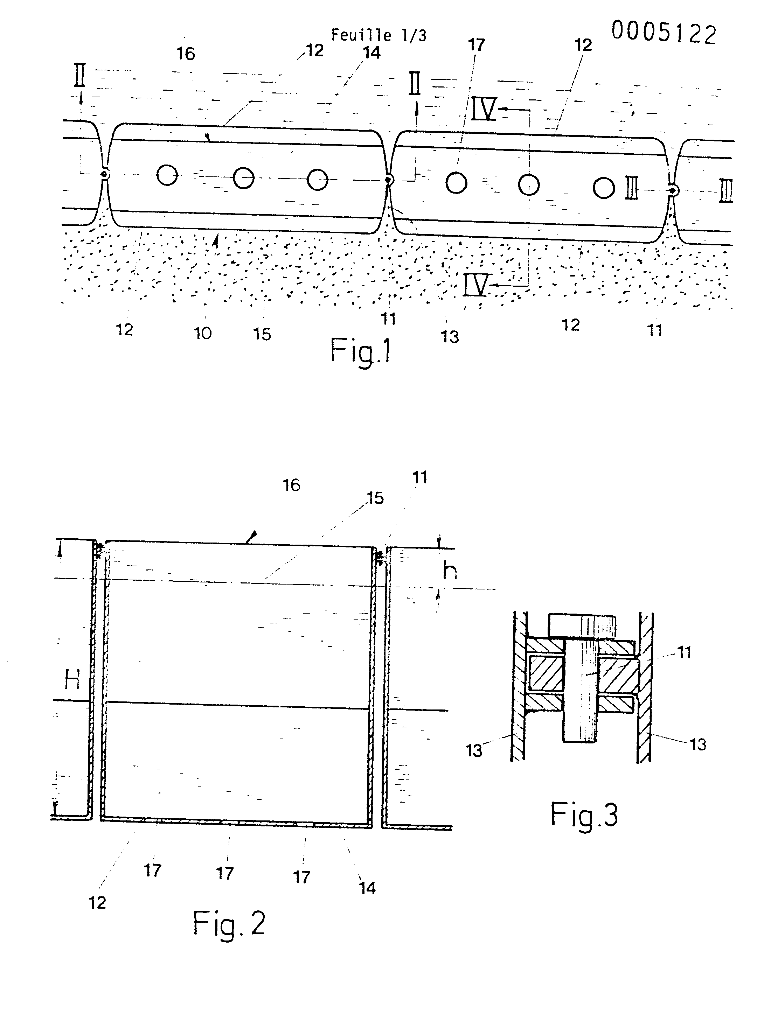

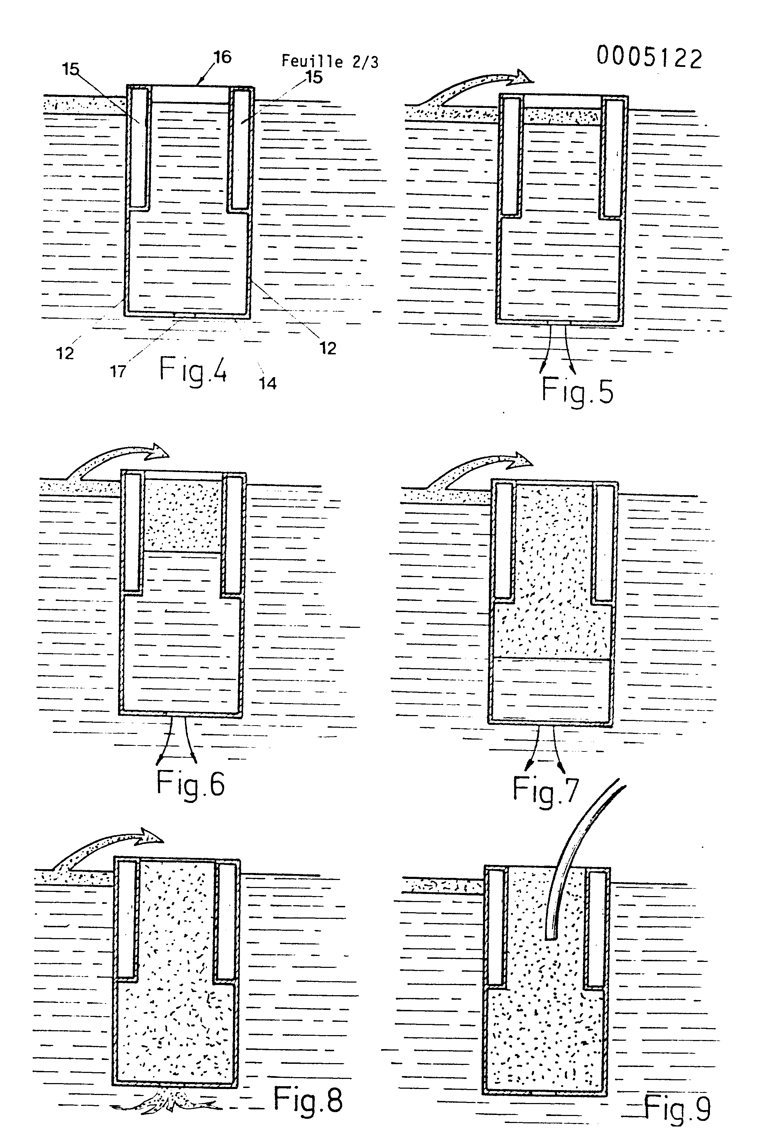

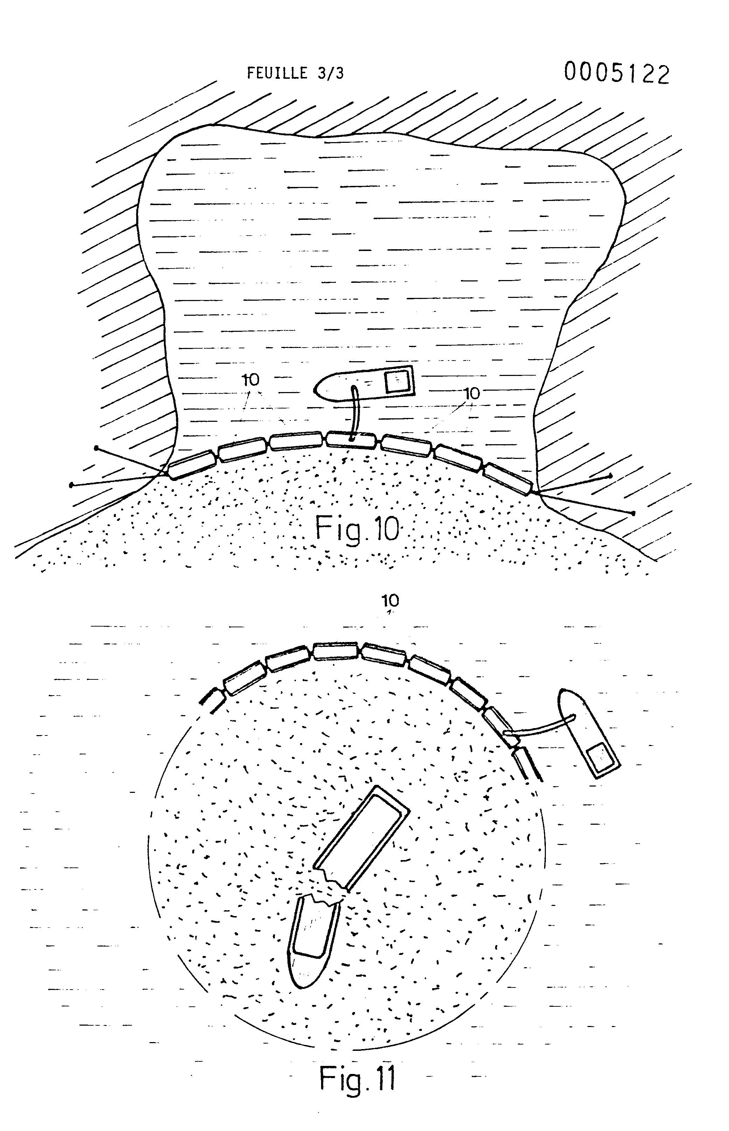

La figure 1 en est une vue partielle en plan; les figures 2, 3 et 4 sont des vues en coupe à diverses échelles selon les lignes II-II, III-III et IV-IV de la figure 1; les figures 5 à 9 sont des vues analogues à la figure 4 expliquant le fonctionnement du barrage et les figures 10 et 11 sont des vues en plan illustrant deux mises en oeuvre du barrage.

Le barrage représenté est essentiellement constitué par des cuves 10 en métal ou en plastique, éventuellement armé, reliées les unes aux autres par des articulations 11 de manière à former une chaîne.

Les cuves comprennent chacune deux parois verticales parallèles 12 raccordées par deux parois incurvées 13 et par un fond 14. Les parois 12 sont doubles sur une partie de leur hauteur de manière à limiter des caissons de flottaison 15. Elles présentent à leur partie supérieure une ouverture rectangulaire 16 et dans le fond 14 trois orifices 17.

Lorsque les cuves sont mises à l'eau, elles se remplissent d'eau par les orifices 17 et flottent verticalement de façon parfaitement stable. Le volume des caissons 15 est déterminé de manière que la hauteur émergente h soit environ égale à 1/10 de la hauteur totale H.

0005122

- 3 -

Le fonctionnement du barrage est le suivant :

Les vagues qui arrivent contre le barrage, passent par dessus les bords des parois 12 et se déversent dans les cuves à travers les ouvertures 16. Les hydrocarbures qui sont véhiculés par ces vagues et qui entrent dans les cuves en expulsent progressivement l'eau qu'elles contiennent à travers les orifices 17 (figures 5 à 8).

Ce processus se poursuit jusqu'à ce que les cuves soient complètement remplies d'hydrocarbures. A partir de ce moment les hydrocarbures ressortant par les orifices 17 (figure 8), il faudra les pomper (figure 9).

Le processus de remplissage repose sur les deux phénomènes hydrostatiques suivants :

1) L'eau et les hydrocarbures n'étant pas miscibles et ayant des densités $d_e$ et $d_h$ différentes (env. 1,0 et 0,9) se séparent en deux couches, les hydrocarbures flottant sur l'eau.

2) Les hydrocarbures déversés dans les cuves par les vagues atteignent un niveau plus élevé que celui de la mer, ce qui crée une surpression au niveau des orifices 17 et l'expulsion, à travers ces derniers, d'une certaine quantité d'eau rétablissant l'équilibre; à chaque nouvelle vague se déchargeant dans les cuves, le phénomène se reproduit.

La condition à satisfaire pour que les hydrocarbures puissent remplir complètement les cuves est que :

$$h = \frac{d_e - d_h}{d_e} \cdot H \cong \frac{1,0 - 0,9}{1,0} \cong 1/10$$

- 4 -

Si cette condition n'est pas satisfaite, l'interface hydrocarbures-eau se stabilisera à une certaine profondeur.

L'invention n'est évidemment pas limitée à ce qui est représenté au dessin et décrit ci-dessus.

En particulier les cuves pourraient être fixes, par exemple intégrées à des installations portuaires ou côtières.

Par ailleurs chaque cuve sera avantageusement dotée d'un dispositif indiquant le niveau de l'interface hydrocarbures-eau et de moyens obturant automatiquement les orifices 17 lorsque les cuves sont pleines d'hydrocarbures afin d'éviter leur rejet à travers ces derniers.

Le barrage décrit pourra être utilisé soit pour empêcher qu'une nappe d'hydrocarbures venant du large atteigne des parties névralgiques d'une côte (ports, plages, abers, etc.) - figure 10 -, soit pour circonscrire dans une zone limitée les hydrocarbures s'échappant d'un pétrolier accidenté - figure 11 -, dans les deux cas en récupérant un maximum d'hydrocarbures.

D'autre part, on pourrait non pas pomper les hydrocarbures, mais vidanger les cuves, soit sur place, soit dans un lieu approprié, ceci impliquant évidemment des moyens tels que ceux par exemple déjà mentionnés ci-dessus pour fermer les orifices 17, et éventuellement les ouvertures 16.

Enfin, on pourrait prévoir des moyens permettant de faire communiquer plusieurs cuves entre elles pour ne pas être obligé de devoir pomper les hydrocarbures cuve par cuve.

REVENDICATIONS

1) Barrage pour collecter les hydrocarbures flottant à la surface de plans d'eau, par exemple à la surface de la mer, caractérisé par le fait qu'il est constitué par des cuves présentant chacune au moins une ouverture supérieure et au moins un orifice inférieur, des moyens maintenant ces cuves partiellement immergées de manière que les vagues se déchargent au moins partiellement dans les cuves à travers lesdites ouvertures.

2) Barrage selon la revendication 1, caractérisé par le fait que lesdites cuves sont flottantes.

3) Barrage selon la revendication 1, caractérisé par le fait que les cuves sont fixes.

4) Barrage selon la revendication 1, caractérisé par le fait que lesdits moyens maintiennent les cuves immergées aux 9/10 env. de leur hauteur.

5) Barrage selon la revendication 1, caractérisé par le fait que chaque cuve est équipée d'un dispositif indiquant le niveau inférieur des hydrocarbures qu'elle contient.

6) Barrage selon la revendication 1, caractérisé par le fait que chaque cuve est dotée d'un dispositif obturateur de l'orifice du fond.

7) Barrage selon la revendication 6, caractérisé par le fait que ledit dispositif obturateur ferme automatiquement ledit orifice lorsque la cuve est pleine d'hydrocarbures.

0005122

Fig.1

Fig.2

Fig.3

0005122

Fig.4

Fig.5

Fig.6

Fig.7

Fig.8

Fig.9

Fig.10

Fig.11

**RAPPORT DE RECHERCHE EUROPEENNE**

Office européen des brevets

| DOCUMENTS CONSIDERES COMME PERTINENTS | | | CLASSEMENT DE LA DEMANDE (Int. Cl.) |
|---|---|---|---|
| Catégorie | Citation du document avec indication, en cas de besoin, des parties pertinentes | Revendication concernée | E 02 B 15/04<br>B 65 D 89/10 |
| X | FR - A - 2 357 682 (BRIDGESTONE TIRE COMP. LTD.)<br>* Page 2, lignes 31-39; page 3, lignes 1-36; figures * | 1,2 | |
| | -- | | |
| X | US - A - 3 703 084 (J. NUGENT)<br>* Colonne 2, lignes 9-22,63-68; colonne 3, lignes 1-15; figures 1-3 * | 1,3 | |
| | -- | | DOMAINES TECHNIQUES RECHERCHES (Int. Cl.) |
| | US - A - 3 886 750 (R. AYERS)<br>* Colonne 2, lignes 1-48; colonne 3, lignes 27-68; colonne 4, lignes 1-14; figures 1-4 * | 1 | E 02 B |
| | -- | | |
| | FR - A - 2 109 143 (AQUANOX)<br>* Page 4, lignes 23-37; figure 6 * | 1 | |
| | -- | | |
| | FR - A - 1 232 739 (O. PAUSER)<br>* Page 2, colonne 2, lignes 59-61; page 3, colonne 1, lignes 1-24; figure 5 * | 6,7 | |
| | -- | | CATEGORIE DES DOCUMENTS CITES |
| A | GB - A - 1 336 937 (N. CERASARI)<br>* Page 2, lignes 89-102; figure 5 * | 1 | X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons |
| | ---- | | |
| | | | &: membre de la même famille, document correspondant |

X Le présent rapport de recherche a été établi pour toutes les revendications

| Lieu de la recherche | Date d'achèvement de la recherche | Examinateur |
|---|---|---|
| La Haye | 16-07-1979 | HANNAART |

OEB Form 1503.1  06.78